# EUROPEAN PATENT APPLICATION

(11) **EP 1 734 672 A1**
(43) Date of publication of application: **20.12.2006**
(21) Application number: 05729479.5
(22) Date of filing: 28.03.2005
(51) Int. Cl.: H04B 7/26

(54) **RADIO FREQUENCY COMMUNICATION SYSTEM COMPRISING THE USE OF TWO FREQUENCY BANDS**

(30) Priority: 31.03.2004 ES 200400781
(71) Applicant: Sgc Telecom - SGPS, S.A., 2814 Almadora (PT); Cable AML, Inc., Torrance, CA 90505 (US)
(72) Inventor: VILLA SANZ, Luis, E-28230 Las Rozas (Madrid) (ES)
(74) Representative: Primo de Rivera y Urquijo, Jose A.
(86) International application number: PCT/ES2005/000163
(87) International publication number: WO 2005/096521

(57) **Abstract**

It integrates, in series, an LMDS transport network (1) and an access network (5), such as a BB network, two frequency bands being used, a first one of a large bandwidth in the LMDS network (1), and a second one for the access network (5), of a smaller bandwidth. Network (1) provides said access network (5) with multiple services, simultaneously transmitting contents by means of signals of one or more technologies, and a signal processing device (2) is embedded between both networks (1, 5) for selecting part of the signals transmitted by the transmission network (1) and adapting, with a frequency translation, only selected signals to transmission means of network (5), and also suitable for adapting the signals from network (5) to transmission means of network (1).

## Description

### Field of the Art

The present invention relates to a radio frequency communications system with use of two frequency bands, providing essential novelty features and notable advantages with regard to known means used for the same purposes in the current state of the art.

More particularly, the invention proposes the development of a system by means of which the drawbacks derived from the application of the current law relating to the regulation of available frequencies and bandwidths are overcome, given the clear inadequacies of the radio spectrum available for covering the different needs of the users (military, civil, private uses, and so on).

The field of application of the invention is included in the telecommunications field, especially that comprising wideband wireless subscriber loop technologies.

### State of the Prior Art

In the world of wireless telecommunications, the radio spectrum is a critical element due to two essential characteristics of the radio license, namely the operating frequency and the bandwidth, which parameters determine both the art and the possibility of rendering certain services.

The operating frequency entails the physical characteristics of transmission, coverage, penetration, rain attenuation, etc. Thus, as the frequency decreases, the ability of the signal to go through "obstacles", whether the latter are walls or rain, increases, i.e., the coverage and penetration increase.

The bandwidth entails the service characteristics, since the larger the bandwidth, the greater the transmission capacity.

From the start, the spectrum has been considered a scarce asset, and the operating bands have been assigned according to the market and the available technology, reaching a situation where the lowest operating frequencies, which due to their physical characteristics are the most valued (greatest penetration, simplest technology, etc.), are more divided into their bandwidths and thus the services they can offer are more limited. Generally, the different governments have reserved large bandwidths for the highest frequencies, the networks most extended today being those having a relatively small frequency and thus limited in their bandwidth.

As a result of the above, a typical wireless telecommunications operator does not have in its license the bandwidth necessary to meet the traffic needs required by its potential clients, which leads to the creation of cellular structures in which the available spectrum is used multiple times in a given area (e.g, a city).

These cellular networks make up that which is known as an "access network" because they are the ones responsible for reaching the final user.

In order to have the complete telecommunications network, it is necessary to connect all these cells together and to the operator's management center. It is in this management center where the users are controlled and the interconnections with other networks are held, this network being known as a "transmission network".

Today, given the great need for services, large bandwidths are required; consequently there generally is a need to resort to high frequencies for point-multipoint wireless access networks. The transmission network is characterized by being a wired network, fiber optic network or radio link, typically point-to-point but sometimes point-multipoint, being of great capacity due to having to add the traffic in all cells based on high capacity digital links. Whereas the wireless access network is characterized by typically being point-multipoint, but sometimes point-to-point, having a reduced capacity, that necessary for the group of users of its coverage area, by establishing low capacity digital links.

The architecture used until now for implementing these networks is based on that the connection between the management center (MC) and the access cells is carried out by means of digital, point-to-point data links, it being possible that the traffic from several cells is being added in greater capacity links in the path between a cell and the management center. In the cell, the information is received from the MC and the access systems which by means of point-multipoint links reach the users are attacked.

The transmission technologies used in each of the two networks usually are completely different, optimized each one of them in accordance with its function.

A proposal for combining two of such networks, i.e. a transmission and an access network, is that provided by patent EP-A-0786876, wherein a two-way radio communications system is proposed combining two subsystems, both of short range, one of high frequency (LMDS: 'Local Multipoint Distribution System') and great capacity, and the other one (DECT: 'Digital European Cordless Telecommunications') of lower frequency and smaller capacity, the first one being used for transmitting information requiring a large bandwidth (such as video) as well as for transmitting the communications between a user's DECT receiver and a corresponding DECT server, or vice versa, and the DECT subsystem being used for communications requiring a smaller bandwidth and for transmitting authorizations/encryptions.

Although said patent represents an advance with regard to the state of the art, it is limited to short range transmissions, both as far as the transmission and the access network are concerned, as well as to a simple broadcast of all the information, or carriers, to the user. Likewise, the access network, or DECT subsystem, is only used to individually give service to a single user, i.e. access to user is not intended to be solved, but distribution inside the house. For the case of large bandwidth services, e.g. video, both subsystems or networks provide service to the user simultaneously, i.e. that the LMDS network is not only a transmission network but also of direct access to the user. A problem of said simultaneous transmission is that the system maintains the limitations of both networks, which work in collaboration so as to complement each other.

Patent US-A-6477369 also proposes combining a high capacity LMDS network with a lower capacity MMDS network, although in this case said combination is in parallel and not for using one of them as a transmission network and the other as an access network, but to switch from one to the other when the first one starts becoming saturated. In this case, both networks may be considered as access networks and there is no reason for the abovementioned problem of using completely different transmission technologies in each of the networks to exist, as connecting both networks is not intended in the proposal made by said patent.

### Explanation of the Invention

It appears necessary to offer an alternative to the state of the art which covers the gaps found therein and allows for the serial combination of a high capacity network with a lower capacity network, so as to take advantage of the advantages of each one of them for carrying out specific and not shared functions more adapted to the characteristics of each type of network, in order to finally be able to individually and selectively supply contents to a series of users, or a community, i.e. a point-multipoint service.

The invention means a considerable advance as far as said technology is concerned since a system is developed by means of which it is possible to connect both networks and match the transmission technologies with the exception of their radio characteristics, i.e. that the signal received by the users is not generated from the actual base stations but from the management center, apart from the particular generation of information which is intended to be added. Furthermore, compared to those networks in which all signals generated in the management center are redistributed in their entirety to the access network, the invention presented here provides the advantage of being able to select those carriers which are intended to be transmitted to each of the access networks, thus facilitating a better sizing of the services offered to the user.

Traditionally, point-multipoint wireless networks have been used as networks for accessing the users. In the case of high frequency LMDS networks, i.e. those included in the so-called millimetric bands (from 24 to 31 GHz), the intrinsic characteristics of the transmissions in those bands make a direct view between the base station and the user's radio equipment necessary so as to establish the communication. This has two very significant implications, on one hand, the difficulty of providing coverage to all users in a urban area (shadow areas occur), and on the other hand, it is rather complicated to implement the signal distribution in the user, i.e. to carry the signals from the building roof to the interior where the user's modem is placed.

In addition, the state of the art in these frequencies makes the coverage radiuses that may be reached be around two-four kilometers. In short, these systems have large bandwidths but also serious difficulties in being able to reach the users.

On the other hand, there are Low Band (LB) licenses, between 2.4 and 3.5 GHZ, up to the 10 GHz band, such as e.g. the MMDS ("Multichannel Multipoint Distribution System") license, which due to the nature itself of communications at those frequencies, together with the development of new signal modulation and treatment techniques, may greatly alleviate the two difficulties set forth above.

The drawback is that these LB licenses tend to have little bandwidth, whereupon in order to meet market needs, they are forced to deploy hugely dense networks as regards the base stations, which are not profitable due to transmission network needs.

A market in which these technologies adapt fairly well is rural environments, where user dispersion may be tackled with the large coverage radiuses and further traffic needs are small (due to the small population).

That is, the use of the LB technology allows reaching the users reasonably well but does not offer enough capacity.

The present invention relates to a radio frequency communications system which integrates, connected in series, an LMDS transmission network, which in general covers a distance of one or several Km., and an access network, such as said LB network, said transmission network being intended for transmitting a series of contents to said access network and said access network being intended for individually supplying part of said contents to a series of users, two frequency bands being used, a first one in said LMDS transmission network, of a large bandwidth, and a second one in said access network of a smaller bandwidth.

Said transmission network is adapted for supplying multiple services to said access network, simultaneously transmitting said series of contents by means of signals of one or more technologies and because it comprises a signal processing device embedded between both networks, suitable for selecting a certain part of the signals transmitted by the transmission network and accommodating, with a corresponding frequency translation, only said selected signals to transmission means of the access network, and also suitable for accommodating the signals from the access network to transmission means of the transmission network.

In other words, the transmission network is made through the frequency with a large bandwidth, i.e. the high frequency one. Subsequently, the signal processing is carried out in the base stations of the access network, adapting the carriers to the corresponding cell, and their transmission is performed by means of another radio frequency system, this time at a lower frequency, given that a capacity as large as in the transmission network is not required.

Said signal processing is not based on a simple repetition of the signal with a frequency translation, passing the circulating signal via the transmission network to the access network, but a selection of a certain part of the signals and/or contents transmitted by the transmission network and an adaptation thereof to the transmission means of the access network are carried out.

As an analogy of the functionalities proposed by the invention and discussed in the foregoing, one could cite the optical-electrical converters (WDMs), which have allowed to shift cable headends from near the user to the management centers, but use clearly differentiated means, optical fiber from the management center to the base station, and coaxial cable from the base station to the user. The radio frequency system may be implemented provided that the (main, but only the data link layer) transmission system between the equipment allows it.

### Brief Description of the Drawings

These and other features and advantages of the invention will be clearly highlighted from the following detailed description of a preferred embodiment, only given by way of illustrative and non-limiting example, with reference to the attached drawings, wherein:
- Figure 1 depicts the proposed network diagram in which the arrangement of the different elements that make it up, as well as the distribution of the signals to each of the sectors in a selective manner, is shown,
- Figure 2 depicts the block diagram of the processing device which makes the execution of the network diagram shown in Figure 1 possible,
- Figure 3 is an illustration of a signal processing device according to an embodiment example, and
- Figure 4 is a flow diagram depicting the communication stages between a user and a control module according to the present invention for an embodiment example.

### Detailed Description of Some Embodiment Examples

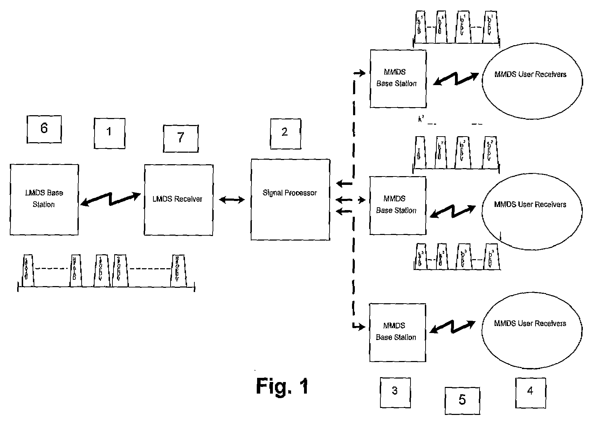

As shown in Figure 1, the present invention relates to a radio frequency communications system integrating, connected in series, an LMDS transmission network 1 covering a distance of one or several Km., and an access network 5, which for the illustrated embodiment example is an MMDS network, said transmission network 1 being intended for transmitting a series of contents to said access network 5, and said access network 5 being intended for individually supplying part of said contents to a series of users, two frequency bands being used, a first one in said LMDS transmission network 1, of a large bandwidth, and a second one in said access network 5, of a smaller bandwidth.

Said transmission network 1 is adapted for supplying said access network 5 with multiple services, simultaneously transmitting said series of contents by means of signals of one or more technologies and because it comprises at least one signal processing device 2 embedded between both networks 1, 5, suitable for selecting a certain part of the signals transmitted by the transmission network 1 and adapting, with a corresponding frequency repetition and translation, only said selected signals to transmission means of access network 5, and also suitable for adapting the signals from the access network 5 to transmission means of transmission network 1.

It can be said then that said signal processing device 2 operates as an interface between both portions of the system.

Said LMDS network 1 comprises at least one LMDS base station 6 in communication with one or more equipment 7 suitable for at least receiving the signals from said LMDS base station 6, and said MMDS network 5 comprises a plurality of MMDS base stations 3 in communication, one by one, with a plurality of corresponding MMDS equipment 4 suitable for at least receiving the corresponding signals from said MMDS base stations 3, accessible by corresponding users.

Although the LMDS 7 and MMDS 4 equipment have been indicated in Figure 1 as LMDS and MMDS receivers, respectively, as this is their main function, they not only can work as receivers, but they are also suitable for transmitting, making a return path from the MMDS equipment 4, accessible by the users, to the LMDS base station or stations 6 possible by using said access 5 and transmission 1 networks, and said LMDS 6 and MMDS 3 base stations being suitable for transmitting to and receiving from said equipment 7, 4, respectively.

Although the invention refers to a transmission network 1 that uses LMDS technology for providing the abovementioned frequency and bandwidth characteristics, the use of another technology of similar characteristics could also be possible. As regards the access network 5, the latter is made up of a point-multipoint radio communications system which carries out the distribution of the desired signals to the final users and is capable of providing a high penetration so as to reach in the most appropriate manner the greatest number of final users. In order to implement said access network 5, MMDS technology has been chosen because it provides the desired characteristics, even though the use of another technology of similar characteristics could also be possible.

As regards the LMDS transmission network 1, the latter allows the simultaneous transmission of multiple signals of diverse technologies by using the millimetric bands, even though working with a single technology is also possible.

It should be noted as a notable feature the possibility of choosing a subset of the signals transmitted by the transmission network 1 and sending them to the desired access network (which for the embodiment example depicted by Figure 1 are three), i.e. adapting the contents to each of the cells that make up the network, thus adding a degree of flexibility in the design of wireless networks unprecedented to date.

An example of said selection of part of the contents supplied via the LMDS network 1, or in other words, the selection and distribution of the desired carriers between the different access network from all those supplied by the LMDS base station or stations 6, is shown in Figure 1.

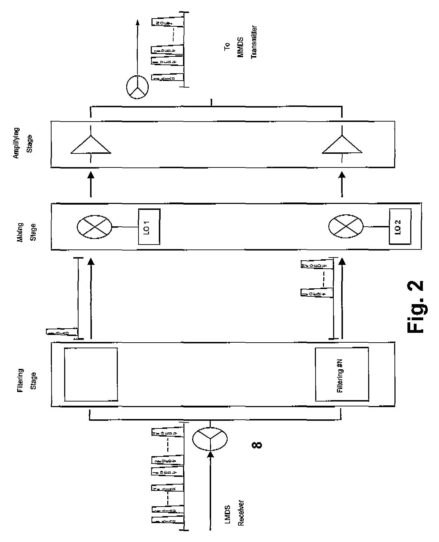

The diagram of processing device 2 that allows carrying out this type of networks described herein is that shown in Figure 2, which is thus established as a Multi-Dwelling Unit (MDU), as an access node with a given (geographic or demographic) coverage of the operator's unified transmission-access system or network.

Said signal processing device 2 is schematically depicted for an embodiment example, at a modular level, in said Figure 2.

As can be seen, the output of LMDS equipment 7 (see Figure 1) acting as a receiver provides the input to this processing device 2, wherein all signals transmitted by the transmission network 1 are present. The first stage of the proposed design consists of a distribution frame 8 (arranged before or in the processing device 2 itself) which distributes the input signal into as many processing lines as carrier blocks must be processed. In the case of the example, it has been decided that each MMDS equipment 4 shall transmit one data carrier and the whole block of the video carriers.

The processing device 2 then comprises a filtering stage suitable for independently filtering data signals, video signals and simple or composite signals with different formats and structures coming from said LMDS network 1, with corresponding filtering substages #1...#N. Said filtering stage is independently designed in each of the lines to select only those carriers intended to be transmitted via the transmitter or base station 3 of the access network associated to said line of signal processing device 2. For an embodiment example, one of the filters shall be tuned to filter the desired data carrier and the other shall be tuned to filter the portion of the spectrum where the video carriers are located.

The processing device then comprises a mixing stage suitable for carrying out said frequency translation, with the assistance of corresponding local oscillators LO1, LO2, with which the frequency conversion necessary for translating the carriers from the original frequencies (around 24-31 GHz) to the frequencies of access network 5 (2.4-3.5 GHz to the 10 GHz band) is carried out and if necessary proceeding to correctly place them within the bandwidth available in said network 5.

Finally, the processing device comprises an amplifying stage suitable for regenerating the signals from said mixing stage and regenerating and adapting them to the input levels required by each of the MMDS base stations 3 (indicated in Figure 2 as an MMDS transmitter).

It should be stressed that this system is completely adaptable to the network sizing requirements made by the operator, allowing to select as many individual carriers as desired by simply adding the necessary processing lines.

In an upwards direction, the processing device 2 must only multiplex/combine the signals from each of the MMDS base stations 3 so as to place the carriers in a coordinated manner, located at different frequencies, and resulting in said combination feeding the LMDS equipment 7 of transmission network 1.

The system has been implemented at 28 GHz and 2.5 GHz with DOCSIS transmission systems for Data and DVB-C transmission systems for Television, although there should be no difficulty for its extension in all the LMDS band (24-42 GHz) for the frequency of transmission network 1, as well as for the entirety of the MMDS band (2-10 GHz) at the frequency of access network 5.

Also, the system has been carried out with a two-way DOCSIS 1.1 data system which is FDD/TDMA, nevertheless it is equally valid for TDD systems (currently there is already TDD repeater equipment commercially available), as well as for any TDMA, CDMA, FDMA access system and so on.

For a more elaborate embodiment example, said signal processing device 2 is suitable for carrying out a digital processing of the signals it receives, having as its main function the reception of a multiple signal from said LMDS network 1 with digital contents for its subsequent processing. The final objective of the processing is to generate a customized contents package (a subset of the total contents at input) to be sent to the access network 5, which changes in time according to control signals.

For said more elaborate embodiment example, the abovementioned signal adaptation is not static but dynamic, i.e., it varies in time according to the service needs of the users connected to the small capacity network or MMDS network 5.

For said embodiment example, the proposed system comprises a control module suitable for controlling, by means of output or control signals, said signal processing device 2 so that the latter carries out said selection of a certain part of the received signals and the corresponding processing thereof.

Said control module comprises a series of channel inputs for communicating with selector equipment of said users, by means of which the users may select the contents to be received via their respective MMDS equipment 4, to which they have access, by means of sending signals in form of requests to said control module.

Said processing device 2 comprises the following stages:
- A signal reception stage wherein the signals received from said LMDS network 1 are filtered and distributed.
- A demodulating stage comprising a battery of receivers which demodulate each and every signal at the input and the content of which can become part of the final contents. These receivers deliver the demodulated signal to the following stage in base band.
- A processing stage. This stage consists of a series of remultiplexers which receive the entirety of the binary flows delivered by the LMDS equipment 7 and which according to control signals select which of the contents are demanded by the users. With this information, the number of binary flows required by the narrowband output channel are shaped (multiplexed).
- A modulating stage, which consists of a battery of modulators receiving the binary flows of the processing stage and modulating them in the technology suitable for the output MMDS channel or channels 5.
- A signal combination and adaptation stage, which frequency multiplexes all output signals and adapts their characteristics to one or more output MMDS channel or channels 5.
- A control stage, carried out by said control module. It is the one responsible for communicating with the users so as to receive the requests as well as commanding the processor to include the necessary contents. It also informs the user about how to access the contents he/she has requested. This communication is performed in real time and modifies the selection of contents demanded by the users.

For the system to work, it is necessary to establish a communication between the users, via corresponding user devices comprising at least the abovementioned selector equipment and processing device 2, to notify its requirements. Processing device 2 modifies the contents generated at its output according to the requests of the customers.

To this end, said control module is also suitable for sending data signals to said users with information regarding the procedure for accessing the selected contents.

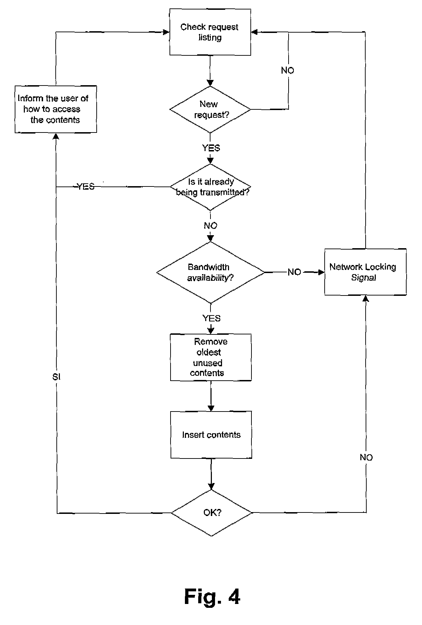

The control module is also suitable for monitoring the state of availability of MMDS network 5, sending a locking signal thereto, removing if necessary the oldest transmitted contents, and inserting new contents to be sent to each user, after the analysis of corresponding requests received from the latter. All this according to an adequate protocol, such as that depicted by Figure 4.

Communication between the users and processing device 2 may be physically established by different means, either cabled or wireless. For ease of installation, and in the absence of other preliminary information, a wireless installation communicating the requests of the users will be preferred. Information transmission is preferably carried out over the TCP/IP protocol, although other transmission stacks may be used.

By way of example, one implementation or variant of this processing device 2 according to said more elaborate embodiment example is based on a wideband LMDS network 1 which transmits digital TV DVB-C signals and DOCSIS data signals to another lower-bandwidth network 5 where not all the TV contents fit.

Due to its nature, the TV service requires that all contents are available to the users. As access network 5 does not have enough bandwidth to accommodate the entire supply of TV channels, processing device 2 may be used to send to the users only those channels they request.

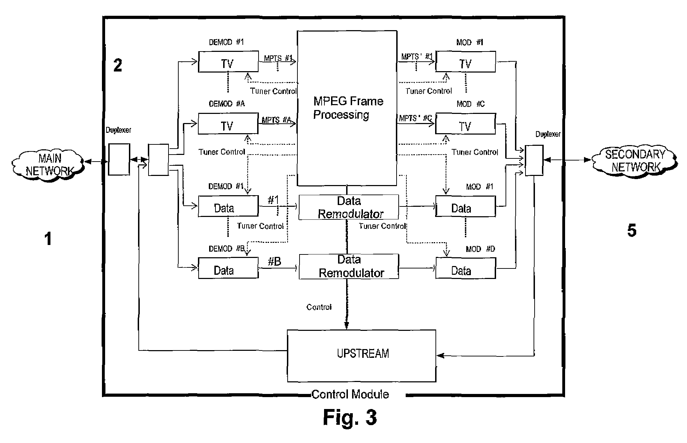

Figure 3 shows an implementation of signal processing device 2 for this variant, wherein both services, TV and data, are treated separately.

In said Figure 3, said control signals are of different natures, named in the figure: "Tuner Control" and "Control", although they must only be interpreted by way of example.

In order for the C<A and D<=B premises to be fulfilled (see Figure 3 to indicate which are the signals meant), i.e. that the output TV signals are lower than the input signals and the data signals lower or equal, a reduction of the bandwidth necessary to provide the service will take place, but giving the users the impression that they have the whole range of the operator's services at their disposal.

In this case, the TV (or STB) receivers will have to be modified so as to implement the communication protocol of Figure 4 (or another one considered adequate) when the user selects a different channel.

The data modems would not require any adaptation, as the processing which is carried out in the processing device 2 is transparent to them.

It is not considered necessary to make the contents of this description more extensive so that a person skilled in the art may understand its scope and the advantages derived from the invention, as well as develop and put into practice the object thereof.

Nevertheless, it must be understood that the invention has been described according to a preferred embodiment thereof, so it may be modified without it involving any alteration of the operation of said invention, said modifications being able to particularly affect both the specific implementation and usage conditions and the components or units included in the system.

## Claims

1. A Radio frequency communications system with use of two frequency bands which integrates, connected in series, an LMDS transmission network (1) suitable for covering a distance of one or several Km. and an access network (5), said transmission network (1) being intended for transmitting a series of contents to said access network (5), and said access network (5) being intended for individually supplying part of said contents to a series of users, two frequency bands being used, a first one in said LMDS transmission network (1), of a large bandwidth, and a second one in said access network (5), of a smaller bandwidth, **characterized in that** said transmission network (1) is adapted for providing said access network (5) with multiple services, simultaneously transmitting said series of contents by means of signals of one or more technologies and because it comprises at least one signal processing device (2) embedded between both networks (1, 5), suitable for selecting a certain part of the signals transmitted by the transmission network (1) and adapting, with a corresponding frequency translation, only said selected signals to transmission means of access network (5), and also suitable for adapting the signals from the access network (5) to transmission means of transmission network (1).

2. A system according to claim 1, **characterized in that** said access network (5) is a BB network.

3. A system according to claim 2, **characterized in that** said LMDS network
(1) comprises at least one LMDS base station (6) in communication with one or more equipment (7) suitable for at least receiving the signals from said LMDS base station (6), and said BB network (5) comprises a plurality of BB base stations
(3) in communication, one by one, with a plurality of corresponding BB equipment
(4) suitable for at least receiving the signals from said BB base stations (3), accessible by corresponding users.

4. A system according to claim 3, **characterized in that** said LMDS (6) and BB (3) base stations are suitable for transmitting and receiving, and said equipment (7, 4) in communication with said base stations are also suitable for transmitting, making possible a return path from the BB equipment (4), accessible by the users, to the LMDS base station (6), which is at least one, possible by using said access (5) and transmission (1) networks.

5. A system according to any one of claims 1 to 4, **characterized in that** said signal processing device (2) comprises at least a filtering stage, a mixing stage and an amplifying stage.

6. A system according to claim 5, **characterized in that**:
said filtering stage is suitable for at least independently filtering data signals, video signals and simple or composite signals with different formats and structures;
said mixing stage is suitable for carrying out said frequency translation; and
said amplifying stage is suitable for regenerating the signals from said mixing stage and regenerating and adapting them to the input levels required by each of the BB base stations (3).

7. A system according to any one of the previous claims, **characterized in that** said signal processing device (2) is suitable for carrying out a digital processing of the signals it receives.

8. A system according to claim 7, **characterized in that** it comprises a control module suitable for controlling, by means of output signals, said signal processing device (2) so that the latter carries out said selection of a certain part of the received signals and the corresponding processing thereof.

9. A system according to claim 8, **characterized in that** said control module comprises a series of inputs of channels for communicating with selector equipment associated to said users, by means of which the users may select the contents to be received by means of sending signals in form of requests to said control module.

10. A system according to any one of claims 7 to 9, **characterized in that** said signal processing device (2) comprises a signal reception stage, for filtering and distributing the signals received form said LMDS network (1), a demodulating stage, a processing stage in communication with said control module and with a series of remultiplexers, for receiving and multiplexing the data received from the previous stage, a modulating stage, and a signal combination and adaptation stage, for modulating, frequency multiplexing and adapting the received signals to one or more output channels or BB channels.

11. A system according to claim 9 or 10, **characterized in that** said control module is also suitable for sending data signals to said users with information regarding the procedure for accessing the selected contents.

12. A system according to claim 11, **characterized in that** said control module is suitable for monitoring the availability state of the BB network (5), sending a locking signal thereto, removing if necessary the oldest transmitted contents, and inserting new contents to be sent to each user, after the analysis of corresponding requests received from the latter.
